# EUROPEAN PATENT SPECIFICATION

(11) **EP 3 822 498 B1**
(45) Date of publication and mention of the grant of the patent: **14.02.2024**
(21) Application number: 19208708.8
(22) Date of filing: 12.11.2019
(51) Int. Cl.: F16B 25/00, F16B 25/10

(54) **WOOD SCREW STRUCTURE**
HOLZSCHRAUBENSTRUKTUR
STRUCTURE DE VIS À BOIS

(43) Date of publication of application: 19.05.2021
(73) Proprietor: Bi-Mirth Corp., Kaohsiung City (TW)
(72) Inventor: SHIH, Yi-Chieh, Kaohsiung City (TW)
(74) Representative: 2K Patentanwälte Blasberg Kewitz & Reichel

(56) References cited:
- EP-A1- 2 735 746
- EP-A1- 3 321 522
- EP-A1- 3 379 092
- EP-A1- 3 401 557
- CN-U- 208 778 439
- DE-U1-202012 010 548
- US-A- 5 827 030
- US-A1- 2013 039 720
- US-A1- 2017 241 463
- US-B2- 8 864 431
- US-B2- 10 247 219

## Description

### FIELD OF THE INVENTION

The present invention relates to a screw for locking wood, and more particularly to a wood screw structure which is easy to discharge chippings and capable of reducing a torque of locking rotationally to prevent the locked wooden material from cracking.

### BACKGROUND OF THE INVENTION

When wood screw is locked into wood, wood with higher hardness has a greater resistance to external force due to high density, which makes screwing the wood screw more laborious, and wood chippings generated during the screwing process are not effectively discharged. The wood chippings remain in the wood and the wood chippings are pressed by the pressure of screwing the wood screw, which easily causes cracking of the wood.

However, if the conventional wood screw is formed with a plurality of irregularly protruded patterns between the screw threads, the pattern will cause unevenness of biting force between the pattern portion of the wood screw and an object during the tapping and locking process, and may cause problems of unstable joint and shaking after the wood screw is tapped. The pattern can be composed of a plurality of rib structures, and the rib structures are not provided with chip discharging structure, so that the wood chippings generated during the tapping and locking process are easily accumulated between the pattern portions and the object, and thus the problem that the object crack may occur since the pressure between the wood screw and the object is increased. In addition, in the wood screw manufacturing process, since the screw threads of each section are spaced apart, the manufacturing process is complete by separately performing multiple times, resulting in problems of higher costs and time-consuming. In view of the above problems, the inventor of the present invention provides a wood screw structure for discharging chippings easily to overcome the conventional drawbacks.

EP 2 735 746 A1 discloses a_screw (2) comprising a head (4) and an elongated body (6) having an end portion (8), said body (6) having a body surface (10), wherein the screw (2) is provided with a thread (12) that extends along a helical thread path along at least part of the body surface (10), said thread (12) having a plurality of windings (14), the thread (12) defining, in between subsequent windings (14), a channel (16) that extends along a helical channel path (18) and has a width (W) in a direction transverse to said helical channel path (18), wherein the screw (2) is further provided, along the body surface (10), with a toothed structure (20) that is positioned in the channel (16).

CN 208 778 439 U discloses a but screw of rapid feeding closure, its main thread on this body of rod is located to a body of rod, a spiral shell head of locating this body of rod one end, opposite this spiral shell head and closure portion and a plurality of spiral ring of locating this body of rod other end, in the body of rod in addition the spiral ring be equipped with the supplementary threadthat a plurality of and main thread is the setting of looks antispin direction, and supplementary thread has a plurality of cuttings sections and links up each other and form, borrows to be the design of opposite arcuation by the tooth surface that meet of two adjacent cutting sections, so that the tooth peak of supplementary thread is wavy setting, so, closure in -process accessible outside themain thread rotary -cut timber, utilize simultaneously supplementary thread is supplementary for the xylon can receive supplementary thread top pushes away cuts dual function down and effectively by chopping with supplementary cutting, and effectively avoid this xylon to twine on this body of rod and the situation that leads to the closure resistance to increase produces, promotes closure feed rate greatly.

### SUMMARY OF THE INVENTION

An object of the present invention is to solve the above problems in the prior art that tapping and locking wood with the conventional wood screw cannot provide effective chippings discharge and disperse the pressure between an object and the screw.

In order to achieve the above object, the present invention provides a wood screw structure according to claim 1, comprising a screw head section, a rod section, a first screw thread and a plurality of crushing rib units, wherein the screw head section includes a top portion and a neck portion extending from the top portion and tapering toward a direction opposite to the top portion. The rod section is integrally formed from the neck portion of the screw head section, the rod section includes a first rod portion connecting the neck portion, a second rod portion, a third rod portion, and a tapered portion extending and tapering outwardly from the third rod portion. The second rod portion is disposed between the first rod portion and the third rod portion, and the third rod portion is disposed between the second rod portion and the tapered portion. The first screw thread is disposed spirally and is protruded on an outer peripheral surface of the tapered portion, the second rod portion and the third rod portion. The plurality of crushing rib units are disposed spirally and protruded around the outer peripheral surface of the third rod portion and the tapered portion, each of the plurality of crushing rib units is crisscrossed with the first screw thread to form an included angle, and each of the plurality of crushing rib units including a rib body and a plurality of crushers protrudingly disposed on the rib body. Moreover, a first discharge gap is formed between the plurality of crushers; and an outer diameter of the plurality of crushers is smaller than a screw diameter of the first screw thread, and greater than a rod diameter of the third rod portion. The invention is characterized in that each rib body forms a first side and a second side at joints with the outer peripheral surface of the third rod portion and the tapered portion, and the first screw thread forms a third side and a fourth side at joints with the outer peripheral surface of the second rod portion, the third rod portion and the tapered portion. And the first side crisscrosses with the third side at the outer peripheral surface of the third rod portion to form a first included angle, an angle of the first included angle is in a range from 40 and 70 degrees, and the first side crisscrosses with the third side at the outer peripheral surface of the tapered portion to form a third included angle, an angle of the third included angle is in a range from 50 and 70 degrees, wherein a degree of the first included angle is different from a degree of the third included angle.

Optionally, the first screw thread disposed on the third rod portion comprises a plurality of second discharge gaps.

Optionally, the first side crisscrosses with the fourth side at the outer peripheral surface of the third rod portion to form a second included angle, and an angle of the second included angle is in a range from 110 and 130 degrees.

Optionally, the first side crisscrosses with the fourth side at the outer peripheral surface of the tapered portion to form a fourth included angle, and an angle of the fourth included angle is in a range from 110 and 130 degrees.

Optionally, the second side crisscrosses with the third side at the outer peripheral surface of the third rod portion to form a fifth included angle, an angle range of the fifth included angle is in a range from 110 and 130 degrees, and an angle of a sum of the first included angle and the fifth included angle is in a range from 150 and 200 degrees.

Optionally, a second screw thread is formed at an end of the first rod portion abutting the second rod portion and corresponding to the top portion.

Optionally, a difference between an outer diameter of the plurality of crushers and a screw diameter of the first screw thread is 0.6mm to 0.7mm.

Therefore, the present invention has the following beneficial efficacies over the prior art:
The present invention is provided with the plurality of crushing rib units on the outer peripheral surface of the third rod portion of the rod section, and the first discharge gap are formed between the crushers of the plurality of crushing rib units, with the first discharge gaps wood chippings produced during tapping and locking of the wood screw can be discharged between two adjacent portions of the first screw thread, and the plurality of crushers can be used to further crush the wood chippings, so that the wood chippings are smoothly discharged during subsequent chippings discharge, and the pressure between the wood screw and the object is evenly released to achieve smooth chippings discharge during tapping and locking.

### BRIEF DESCRIPTION OF THE DRAWINGS

FIG. 1A is a perspective view of a wood screw structure of a first embodiment of the present invention;
FIG. 1B is a partial perspective enlarged view of 1B labeled in FIG. 1A;
FIG. 2A is a front view of the wood screw structure of the first embodiment of the present invention;
FIG. 2B is a partial enlarged view of 2B labeled in FIG. 2A;
FIG. 2C is a cross-sectional view of the 2C-2C section line of FIG. 2B;
FIG. 3A is a perspective view of the wood screw structure of a second embodiment of the present invention;
FIG. 3B is a partial perspective enlarged view of 3B labeled in FIG. 3A;
FIG. 4A is a front view of the wood screw structure of the second embodiment of the present invention;
FIG. 4B is a partial enlarged view of 4B labeled in FIG. 4A; and
FIG. 4C is a cross-sectional view of the 4C-4C section line of FIG. 4B.

### DETAILED DESCRIPTION OF THE PREFERRED EMBODIMENTS

The technical features and operation modes of the present application described in the following preferred embodiments in conjunction with the accompanying figures are provided as reference for examining. In addition, the figures in the present invention are not necessarily drawn according to actual scales in order to facilitate illustrating the proportions. The proportions in the figures are not intended to limit the scope of the requested claims.

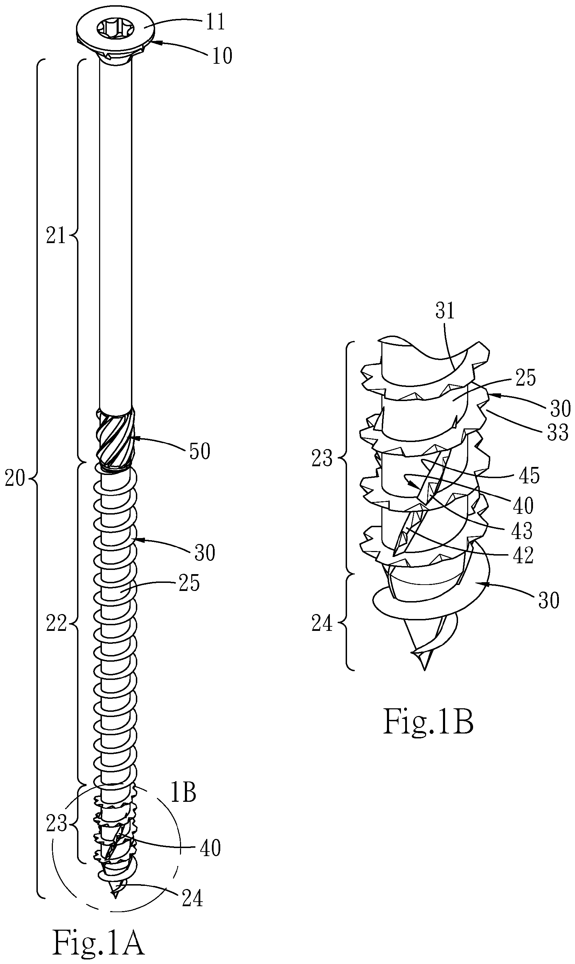

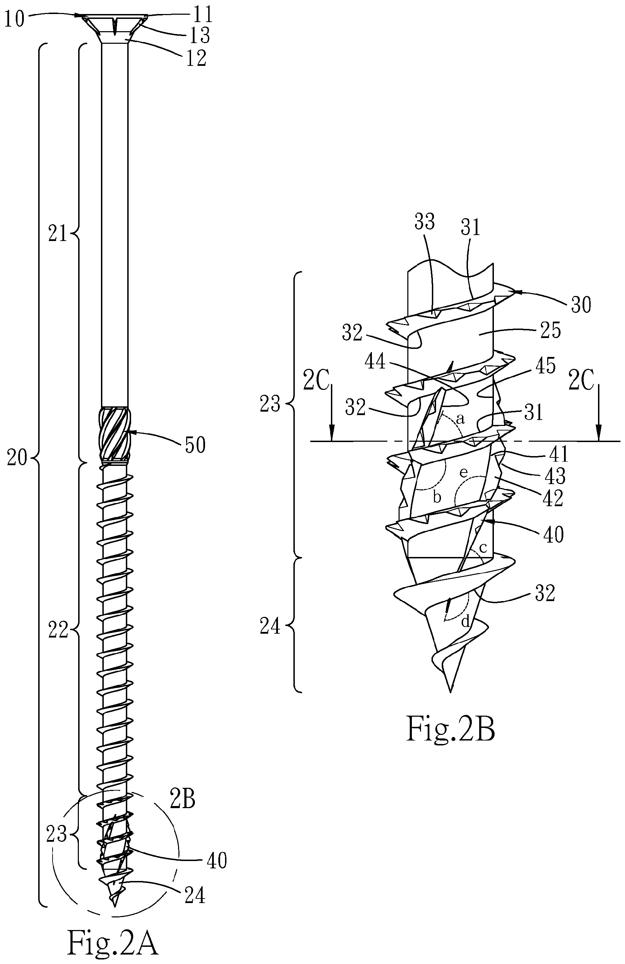

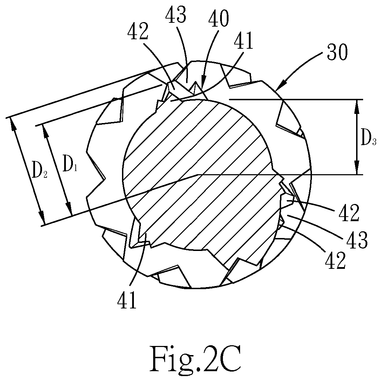

Please refer to FIG. 1A, FIG. 1B, FIG. 2A, FIG. 2B, and FIG. 2C for a first embodiment of the present invention. The present invention provides a wood screw structure, which comprises a screw head section 10, a rod section 20, a first screw thread 30 and a plurality of crushing rib units 40. The wood screw structure of the present invention is used for fixing or joining wooden workpieces, such as wooden floors, wooden furniture, etc., but is not limited thereto.

According to the invention, please refer to FIG. 2A, the screw head section 10 includes a top portion 11, and a neck portion 12 extending from the top portion 11 and tapering toward a direction opposite to the top portion 11. The neck portion 12 is provided with a plurality of ribs 13, and the plurality of ribs 13 are capable of enhancing the embedding property with an object after a wood screw with the wood screw structure is locked into the object.

Please refer to FIG. 2A and FIG. 2B, the rod section 20 is integrally formed from the neck portion 12 of the screw head section 10, and the rod section 20 includes a first rod portion 21 connecting the neck portion 12, a second rod portion 22, a third rod portion 23, and a tapered portion 24 extending and tapering outwardly from the third rod portion 23. The second rod portion 22 is disposed between the first rod portion 21 and the third rod portion 23, and the third rod portion 23 is disposed between the second rod portion 22 and the tapered portion 24; and the first rod portion 21, the second rod portion 22, the third rod portion 23 and the tapered portion 24 of the embodiment are integrally formed in sequence.

The first screw thread 30 is disposed spirally and is protruded on an outer peripheral surface 25 of the tapered portion 24, the second rod portion 22 and the third rod portion 23.

The plurality of crushing rib units 40 are disposed spirally and protruded around the outer peripheral surface 25 of the third rod portion 23 and the tapered portion 24, and each of the plurality of crushing rib units 40 is crisscrossed with the first screw thread 30 to form an included angle. Furthermore, in the embodiment, the plurality of crushing rib units 40 with a quantity of three are formed on the third rod portion 23 and the tapered portion 24, but are not limited thereto. Please refer to FIG. 2B and FIG. 2C, each of the plurality of crushing rib units 40 includes a rib body 41 and a plurality of crushers 42 protrudingly disposed on the rib body 41, wherein a shape of the plurality of crushers 42 is in a shape of a cutting edge or a pyramid, the pyramid may be a triangular pyramid or a quadrangular pyramid, but is not limited thereto. In the embodiment, the shape of the plurality of crushers 42 is a quadrangular pyramid, and a first discharge gap 43 is formed between the plurality of crushers 42. When wood chippings are discharged from the outer peripheral surface 25 between two adjacent portions of the first screw thread 30 through the first discharge gap 43, the chippings passing through the plurality of crushing rib units 40 are further cut by the plurality of crushers 42 with the use of the first discharge gap 43 to facilitate cutting of wood fibers. Therefore, the wood chippings being cut off are continuously discharged along a space of the outer peripheral surface 25 between the two adjacent portions of the first screw thread 30.

Moreover, an outer diameter D1 of the plurality of crushers 42 is smaller than a screw diameter D2 of the first screw thread 30, and larger than a rod diameter D3 of the third rod portion 23, and a difference between the outer diameter D1 of the plurality of crushers 42 and the screw diameter D2 of the first screw thread 30 is in a range from 0.6mm to 0.7mm, so that the wood chippings discharge is prevented from being blocked by the plurality of crushing rib units 40 during locking.

In addition, and according to the invention, each rib body 41 forms a first side 44 and a second side 45 at joints with the outer peripheral surface 25 of the third rod portion 23 and the tapered portion 24, and the first screw thread 30 forms a third side 31 and a fourth side 32 at joints with the outer peripheral surface 25 of the second rod portion 22, the third rod portion 23 and the tapered portion 24. Further, the first side 44 crisscrosses with the third side 31 at the outer peripheral surface 25 of the third rod portion 23 to form a first included angle a, and an angle of the first included angle a is in a range from 40 to 70 degrees. The first side 44 crisscrosses with the fourth side 32 at the outer peripheral surface 25 of the third rod portion 23 to form a second included angle b, and an angle of the second included angle b is in a range from 110 to 130 degrees. The first side 44 crisscrosses with the third side 31 at the outer peripheral surface 25 of the tapered portion 24 to form a third included angle c, and an angle of the third included angle c is in a range from 50 and 70 degrees. The first side 44 crisscrosses with the fourth side 32 at the outer peripheral surface 25 of the tapered portion 24 to form a fourth included angle d, and an angle of the fourth included angle d is in a range from 110 and 130 degrees. In addition, and according to the invention, a degree of the first included angle a is different from a degree of the third included angle c, and the second side 45 crisscrosses with the third side 31 at the outer peripheral surface 25 of the third rod portion 23 to form a fifth included angle e, and an angle of the fifth included angle e is in a range from 110 and 130 degrees. The sum of angle values of the first included angle a and the fifth included angle e is in a range from 150 and 200 degrees, and the first angles a between two adjacent portions of the first screw thread 30 are different. Thus, with the different first angles a between the two adjacent portions of the first screw thread 30, different angles for cutting apart the wood fibers are provided to increase the efficiency of cutting the wood chippings.

Moreover, the first screw thread 30 disposed on the third rod portion 23 is recessed to form a plurality of second discharge gaps 33, thereby reaming a hole is performed by the first screw thread 30, with the second discharge gaps 33 disposed on the third rod portion 23. That is, since the screw diameter D2 of the first screw thread 30 with the second discharge gaps 33 disposed on the third rod portion 23 is larger than the rod diameter D3, after the tapered portion 24 is locked and positioned into a workpiece, the first screw thread 30 with the second discharge gaps 33 disposing on the third rod portion 23 is capable of reducing the contact with the object during the subsequent tapping and locking process. Besides, the reamed holes of the plurality of second discharge gaps 33 for discharging chippings are capable of reducing friction, so that it is labor-saving for a user to tap and lock the wood screw into the object. A second screw thread 50 is formed at one end of the first rod portion 21 abutting the second rod portion 22 corresponding to the top portion 11, wherein the second screw thread 50 of the present embodiment is roughly presented as a twill appearance.

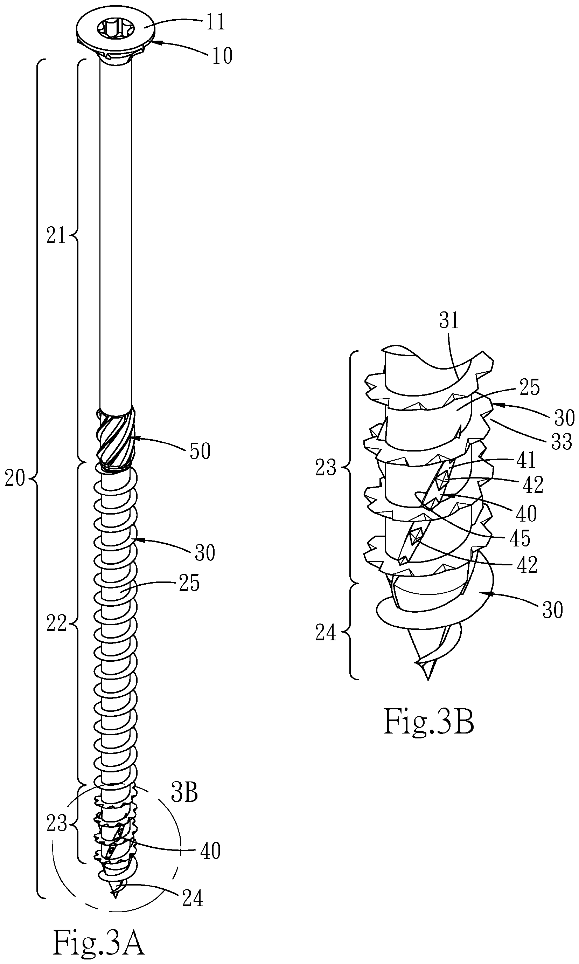

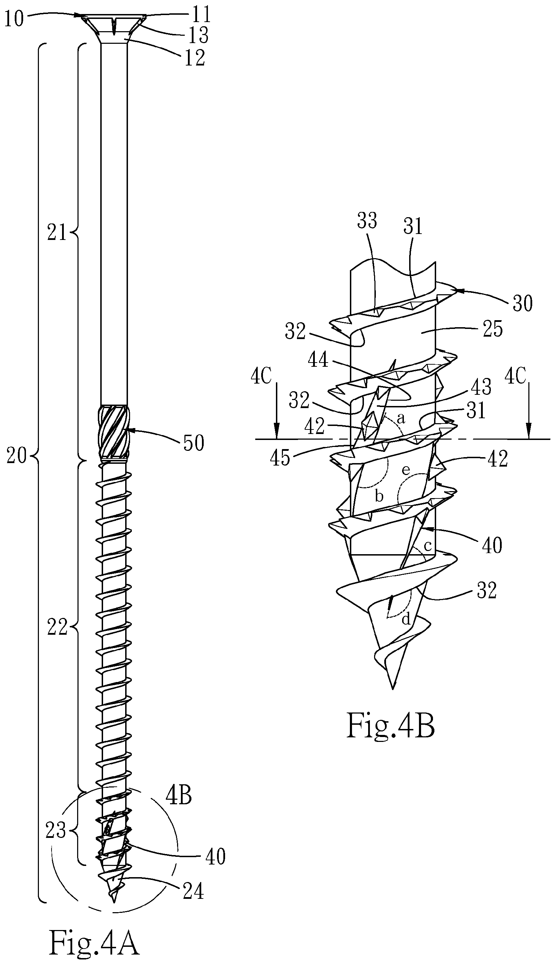

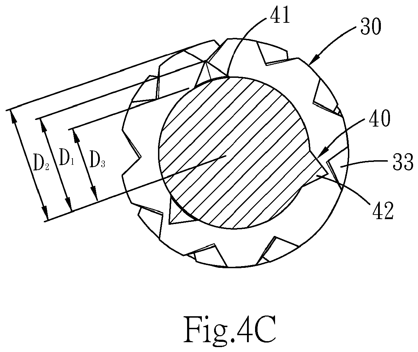

Please refer to FIG. 3A, FIG. 3B, FIG. 4A, FIG. 4B, and FIG. 4C, which are a second embodiment of the present invention, and its main structure is substantially the same as the first embodiment of the present invention, so the same parts are not described herein again, only different structural parts are described as follows. The plurality of crushers 42 of the crushing rib units 40 of the second embodiment are rhombic quadrangular pyramids, thereby when the wood chippings generated during tapping of a screw hole pass through the first discharge gap 43, the wood chippings are crushed and cut apart by the plurality of crushers 42, and discharged quickly through the first discharge gap 43 between the two of the plurality of crushers 42 to prevent the chippings from remaining between the wooden object and the wood screw to be squeezed and pressed with each other, causing frictional force to be increased and even cracking of the wooden object. Further, outer circumferences of the first screw thread 30 and the second screw thread 50 are provided with cutting edges, so that frictional force produced during rotation is effectively reduced, and locking efficiency is improved.

In summary, the outer diameter D 1 of the crushers 42 of the crushing rib units 40 of the wood screw structure of the present invention is smaller than the screw diameter D2 of the first screw thread 30 and the difference is in a range from 0.6mm and 0.7mm, thereby the wood chippings discharge is prevented from being blocked by the plurality of crushing rib units 40 during locking, and the chippings are further crushed quickly and discharged quickly when the object is screwed and tapped, so that the wood chippings are discharged outside of the object, and pressure between the object and the wood screw is evenly released. Furthermore, the first screw thread, the second screw thread and the cutting edges on their outer circumferences can be positioned in the object to provide stability during tapping and locking and to improve the accuracy of alignment.

## Claims

1. A wood screw structure, comprising:
a screw head section (10), a rod section (20), a first screw thread (30), and at least one crushing rib unit (40);
the screw head section (10) including a top portion (11) and a neck portion (12) extending from the top portion (11) and tapering toward a direction opposite to the top portion (11);
the rod section (20), integrally formed from the neck portion (12) of the screw head section (10), the rod section (20) including a first rod portion (21) connecting the neck portion (12), a second rod portion (22), a third rod portion (23), and a tapered portion (24) extending and tapering outwardly from the third rod portion (23), wherein the second rod portion (22) is disposed between the first rod portion (21) and the third rod portion (23), and the third rod portion (23) is disposed between the second rod portion (22) and the tapered portion (24);
the first screw thread (30) disposed spirally and is protruded on an outer peripheral surface (25) of the tapered portion (24), the second rod portion (22) and the third rod portion (23);
the at least one crushing rib unit (40) disposed spirally and protruded around the outer peripheral surface (25) of the third rod portion (23) and the tapered portion (24), each crushing rib unit (40) being crisscrossed with the first screw thread (30) to form an included angle, wherein each crushing rib unit includes a rib body (41) and a plurality of crushers (42) protrudingly disposed on the rib body (41),
wherein a first discharge gap (43) is formed between the plurality of crushers (42), and wherein an outer diameter (D1) of the plurality of crushers (42) is smaller than a screw diameter (D2) of the first screw thread (30), and greater than a rod diameter (D3) of the third rod portion (23);
**characterized in that**
each rib body (41) forms a first side (44) and a second side (45) at joints with the outer peripheral surface (25) of the third rod portion (23) and the tapered portion (24), and the first screw thread (30) forms a third side (31) and a fourth side (32) at joints with the outer peripheral surface (25) of the second rod portion (22), the third rod portion (23) and the tapered portion (24), wherein the first side (44) crisscrosses with the third side (31) at the outer peripheral surface (25) of the third rod portion (23) to form a first included angle (a), an angle of the first included angle (a) is in a range from 40 and 70 degrees, wherein the first side (44) crisscrosses with the third side (31) at the outer peripheral surface (25) of the tapered portion (24) to form a third included angle (c), an angle of the third included angle is in a range from 50 and 70 degrees, and wherein a degree of the first included angle (a) is different from a degree of the third included angle (c).

2. The wood screw structure as claimed in claim 1, wherein the first screw thread (30) disposed on the third rod portion (23) comprises a plurality of second discharge gaps (33).

3. The wood screw structure as claimed in claim 1, wherein the first side (44) crisscrosses with the fourth side (32) at the outer peripheral surface (25) of the third rod portion (23) to form a second included angle, and an angle of the second included angle is in a range from 110 and 130 degrees.

4. The wood screw structure as claimed in claim 1, wherein the first side (44) crisscrosses with the fourth side (32) at the outer peripheral surface (25) of the tapered portion (24) to form a fourth included angle, and an angle of the fourth included angle is in a range from 110 and 130 degrees.

5. The wood screw structure as claimed in claim 1, wherein the second side (45) crisscrosses with the third side (31) at the outer peripheral surface (25) of the third rod portion (23) to form a fifth included angle, an angle of the fifth included angle is in a range from 110 and 130 degrees, and a sum of angle values of the first included angle and the fifth included angle is in a range from 150 and 200 degrees.

6. The wood screw structure as claimed in one of the preceding claims, further comprising a second screw thread (50) being formed at an end of the first rod portion (21) abutting the second rod portion (22) and corresponding to the top portion (11).

7. The wood screw structure as claimed in one of the preceding claims, wherein a difference between an outer diameter (D1) of the plurality of crushers (42) and a screw diameter (D2) of the first screw thread (30) is 0.6mm - 0.7mm.

## Patentansprüche

1. Holzschraubenstruktur, umfassend:
einen Schraubenkopfabschnitt (10), einen Stangenabschnitt (20), ein erstes Schraubengewinde (30) und mindestens eine Brechrippeneinheit (40);
wobei der Schraubenkopfabschnitt (10) einen oberen Abschnitt (11) und einen Halsabschnitt (12) aufweist, der sich von dem oberen Abschnitt (11) aus erstreckt und sich in eine Richtung entgegengesetzt zu dem oberen Abschnitt (11) verjüngt;
den Stangenabschnitt (20), der einstückig aus dem Halsabschnitt (12) des Schraubenkopfabschnitts (10) gebildet ist, wobei der Stangenabschnitt (20) einen ersten Stangenabschnitt (21), der den Halsabschnitt (12) verbindet, einen zweiten Stangenabschnitt (22), einen dritten Stangenabschnitt (23) und einen verjüngten Abschnitt (24), der sich von dem dritten Stangenabschnitt (23) nach außen erstreckt und verjüngt, wobei der zweite Stangenabschnitt (22) zwischen dem ersten Stangenabschnitt (21) und dem dritten Stangenabschnitt (23) angeordnet ist und der dritte Stangenabschnitt (23) zwischen dem zweiten Stangenabschnitt (22) und dem verjüngten Abschnitt (24) angeordnet ist;
das erste Schraubengewinde (30) spiralförmig angeordnet ist und an einer äußeren Umfangsfläche (25) des konischen Abschnitts (24), des zweiten Stangenabschnitts (22) und des dritten Stangenabschnitts (23) hervorsteht;
die mindestens eine Brechrippeneinheit (40) spiralförmig angeordnet ist und um die äußere Umfangsfläche (25) des dritten Stangenabschnitts (23) und des verjüngten Abschnitts (24) herum vorsteht, wobei jede Brechrippeneinheit (40) mit dem ersten Schraubengewinde (30) gekreuzt ist, um einen eingeschlossenen Winkel zu bilden, wobei jede Brechrippeneinheit einen Rippenkörper (41) und eine Vielzahl von Brechern (42) aufweist, die vorstehend auf dem Rippenkörper (41) angeordnet sind,
wobei ein erster Entladungsspalt (43) zwischen der Vielzahl von Brechern (42) gebildet wird, und wobei ein Außendurchmesser (D1) der Vielzahl von Brechern (42) kleiner als ein Schraubendurchmesser (D2) des ersten Schraubengewindes (30) und größer als ein Stangendurchmesser (D3) des dritten Stangenabschnitts (23) ist;
**dadurch gekennzeichnet, dass**
jeder Rippenkörper (41) eine erste Seite (44) und eine zweite Seite (45) an Verbindungen mit der äußeren Umfangsfläche (25) des dritten Stangenabschnitts (23) und des verjüngten Abschnitts (24) bildet, und das erste Schraubengewinde (30) eine dritte Seite (31) und eine vierte Seite (32) an Verbindungen mit der äußeren Umfangsfläche (25) des zweiten Stangenabschnitts (22) bildet, des dritten Stangenabschnitts (23) und des verjüngten Abschnitts (24) bildet, wobei sich die erste Seite (44) mit der dritten Seite (31) an der äußeren Umfangsfläche (25) des dritten Stangenabschnitts (23) kreuzt, um einen ersten eingeschlossenen Winkel (a) zu bilden, ein Winkel des ersten eingeschlossenen Winkels (a) in einem Bereich von 40 und 70 Grad liegt, wobei die erste Seite (44) sich mit der dritten Seite (31) an der äußeren Umfangsfläche (25) des sich verjüngenden Abschnitts (24) kreuzt, um einen dritten eingeschlossenen Winkel (c) zu bilden, ein Winkel des dritten eingeschlossenen Winkels in einem Bereich von 50 und 70 Grad liegt und wobei ein Grad des ersten eingeschlossenen Winkels (a) von einem Grad des dritten eingeschlossenen Winkels (c) verschieden ist.

2. Holzschraubenstruktur nach Anspruch 1, wobei das erste Schraubengewinde (30), das auf dem dritten Stangenabschnitt (23) angeordnet ist, eine Vielzahl von zweiten Auslassspalten (33) aufweist.

3. Holzschraubenstruktur nach Anspruch 1, wobei sich die erste Seite (44) mit der vierten Seite (32) an der äußeren Umfangsfläche (25) des dritten Stababschnitts (23) kreuzt, um einen zweiten eingeschlossenen Winkel zu bilden, und ein Winkel des zweiten eingeschlossenen Winkels in einem Bereich von 110 und 130 Grad liegt.

4. Holzschraubenstruktur nach Anspruch 1, wobei sich die erste Seite (44) mit der vierten Seite (32) an der äußeren Umfangsfläche (25) des verjüngten Abschnitts (24) kreuzt, um einen vierten eingeschlossenen Winkel zu bilden, und ein Winkel des vierten eingeschlossenen Winkels in einem Bereich von 110 und 130 Grad liegt.

5. Holzschraubenstruktur nach Anspruch 1, wobei sich die zweite Seite (45) mit der dritten Seite (31) an der äußeren Umfangsfläche (25) des dritten Stangenabschnitts (23) kreuzt, um einen fünften eingeschlossenen Winkel zu bilden, ein Winkel des fünften eingeschlossenen Winkels in einem Bereich von 110 und 130 Grad liegt und eine Summe von Winkelwerten des ersten eingeschlossenen Winkels und des fünften eingeschlossenen Winkels in einem Bereich von 150 und 200 Grad liegt.

6. Holzschraubenstruktur nach einem der vorhergehenden Ansprüche, ferner mit einem zweiten Schraubengewinde (50), das an einem Ende des ersten Stangenabschnitts (21) ausgebildet ist, das an den zweiten Stangenabschnitt (22) angrenzt und dem oberen Abschnitt (11) entspricht.

7. Holzschraubenstruktur nach einem der vorhergehenden Ansprüche, wobei eine Differenz zwischen einem Außendurchmesser (D1) der Vielzahl von Brechern (42) und einem Schraubendurchmesser (D2) des ersten Schraubengewindes (30) 0,6 mm bis 0,7 mm beträgt.

## Revendications

1. Structure de vis à bois, comprenant
une partie de tête de vis (10), une partie de tige (20), un premier filet de vis (30) et au moins une unité d'ailettes de rupture (40) ;
dans lequel la partie de tête de vis (10) comprend une partie supérieure (11) et une partie de col (12) s'étendant depuis la partie supérieure (11) et se rétrécissant dans une direction opposée à la partie supérieure (11) ;
la partie de tige (20) formée d'un seul tenant à partir de la partie de col (12) de la partie de tête de vis (10), la partie de tige (20) comprenant une première partie de tige (21) reliant la partie de col (12), une deuxième partie de tige (22), une troisième partie de tige (23) et une partie effilée (24), qui s'étend vers l'extérieur et se rétrécit à partir de la troisième partie de tige (23), la deuxième partie de tige (22) étant située entre la première partie de tige (21) et la troisième partie de tige (23), et la troisième partie de tige (23) étant située entre la deuxième partie de tige (22) et la partie rétrécie (24) ;
le premier filet de vis (30) est disposé en spirale et fait saillie sur une surface périphérique extérieure (25) de la partie conique (24), de la deuxième partie de tige (22) et de la troisième partie de tige (23) ;
ladite au moins une unité de nervure de concassage (40) est disposée en spirale et fait saillie autour de la surface périphérique extérieure (25) de ladite troisième partie de tige (23) et de ladite partie effilée (24), chaque unité de nervure de concassage (40) étant croisée avec ledit premier filet de vis (30) pour former un angle inclus, chaque unité de nervure de concassage comprenant un corps de nervure (41) et une pluralité de concasseurs (42) disposés en saillie sur ledit corps de nervure (41),
dans lequel un premier espace de décharge (43) est formé entre la pluralité de concasseurs (42), et dans lequel un diamètre extérieur (D1) de la pluralité de concasseurs (42) est inférieur à un diamètre de vis (D2) du premier filet de vis (30) et supérieur à un diamètre de tige (D3) de la troisième partie de tige (23) ;
**caractérisé en ce que**
chaque corps de nervure (41) forme un premier côté (44) et un deuxième côté (45) au niveau de connexions avec la surface périphérique extérieure (25) de la troisième section de tige (23) et de la section conique (24), et le premier filet de vis (30) forme un troisième côté (31) et un quatrième côté (32) au niveau de connexions avec la surface périphérique extérieure (25) de la deuxième section de tige (22), de la troisième section de tige (23) et de la section conique (24), le premier côté (44) croisant le troisième côté (31) au niveau de la surface circonférentielle extérieure (25) de la troisième section de tige (23), pour former un premier angle inclus (a), un angle du premier angle inclus (a) se situe dans une plage de 40 et 70 degrés, le premier côté (44) croisant le troisième côté (31) au niveau de la surface périphérique extérieure (25) de la partie effilée (24), pour former un troisième angle inclus (c), un angle du troisième angle inclus est dans une plage de 50 et 70 degrés, et dans lequel un degré du premier angle inclus (a) est différent d'un degré du troisième angle inclus (c).

2. Structure de vis à bois selon la revendication 1, dans laquelle le premier filet de vis (30) disposé sur la troisième partie de tige (23) comprend une pluralité de deuxièmes fentes de sortie (33).

3. Structure de vis à bois selon la revendication 1, dans laquelle le premier côté (44) croise le quatrième côté (32) au niveau de la surface périphérique extérieure (25) de la troisième section de barre (23) pour former un deuxième angle inclus, et un angle du deuxième angle inclus est dans une plage de 110 et 130 degrés.

4. Structure de vis à bois selon la revendication 1, dans laquelle le premier côté (44) croise le quatrième côté (32) sur la surface périphérique extérieure (25) de la partie conique (24) pour former un quatrième angle inclus, et un angle du quatrième angle inclus est dans une plage de 110 et 130 degrés.

5. Structure de vis à bois selon la revendication 1, dans laquelle le deuxième côté (45) croise le troisième côté (31) sur la surface périphérique extérieure (25) de la troisième partie de tige (23) pour former un cinquième angle inclus, un angle du cinquième angle inclus est dans une plage de 110 et 130 degrés, et une somme des valeurs angulaires du premier angle inclus et du cinquième angle inclus est dans une plage de 150 et 200 degrés.

6. Structure de vis à bois selon l'une quelconque des revendications précédentes, comprenant en outre un deuxième filet de vis (50) formé à une extrémité de la première portion de tige (21) qui est adjacente à la deuxième portion de tige (22) et qui correspond à la portion supérieure (11).

7. Structure de vis à bois selon l'une quelconque des revendications précédentes, dans laquelle une différence entre un diamètre extérieur (D1) de la pluralité de concasseurs (42) et un diamètre de vis (D2) du premier filet de vis (30) est de 0,6 mm à 0,7 mm.
